# EUROPEAN PATENT APPLICATION

(11) **EP 3 751 317 A1**
(43) Date of publication of application: **16.12.2020**
(21) Application number: 18905814.2
(22) Date of filing: 18.12.2018
(51) Int. Cl.: G01V 8/20, B60R 11/04, G01V 8/10

(54) **CAMERA AND OCCUPANT DETECTION SYSTEM**

(30) Priority: 06.02.2018 JP 2018019592
(71) Applicant: Mitsumi Electric Co., Ltd., Tama-Shi, Tokyo 206-8567 (JP)
(72) Inventor: TAMURA, Kazuya, Tama-shi, Tokyo 206-8567 (JP)
(74) Representative: Patent- und Rechtsanwälte Dr. Solf & Zapf
(86) International application number: PCT/JP2018/046474
(87) International publication number: WO 2019/155766

(57) **Abstract**

A camera 1 includes a first light distribution member 5a for distributing infrared light irradiated from an infrared light irradiation unit 4 to a front seat area in a vehicle, a second light distribution member 5b for distributing the infrared light irradiated from the infrared light irradiation unit 4 to a rear seat area in the vehicle and an imaging unit for imaging an inside of the vehicle irradiated by the infrared light distributed by the first light distribution member 5a and the infrared light distributed by the second light distribution member 5b. The first light distribution member 5a and the second light distribution member 5b are configured so that an average value of illuminance of the infrared light in the front seat area and an average value of the illuminance of the infrared light in the rear seat area are substantially equal to each other

## Description

### TECHNICAL FIELD

The present invention generally relates to cameras used for detecting an occupant in a vehicle and occupant detection systems using this camera, in particular to a camera including a first light distribution member for distributing infrared light to a front seat area in the vehicle and a second light distribution member for distributing the infrared light to a rear seat area in the vehicle and an occupant detection system using this camera.

### BACKGROUND ART

Conventionally, occupant detection for detecting an occupant seated in a front seat (a driver seat or a passenger seat) of a vehicle, a posture of the occupant and/or a body shape of the occupant has been performed in order to determine whether or not an airbag which is provided in the front seat of the vehicle should be deployed and control deployment of the airbag when an accident occurs. For example, patent document 1 discloses a detection device including an infrared light irradiation unit for irradiating infrared light into a vehicle, an imaging unit for imaging a front seat in the vehicle to which the infrared light is irradiated by the infrared light irradiation unit and an image recognition unit for recognizing an occupant seated in a front seat of the vehicle based on an image obtained by the imaging unit.

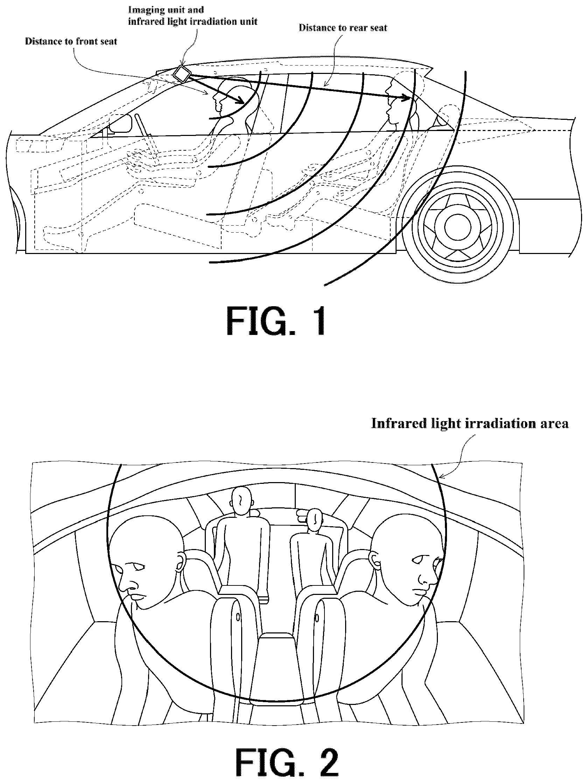

The detection device of the patent document 1 can detect the presence or absence of the occupant seated in the front seat of the vehicle, a posture of the occupant and a body shape of the occupant based on the image obtained by the imaging unit. By using the sensing device described above, an ECU (electronic control unit) of the vehicle for controlling the airbag can determine whether or not the airbag provided in the front seat of the vehicle should be deployed and control the deployment of the airbag. As shown in Fig. 1, the infrared light irradiation unit and the imaging unit of the sensing device are provided at a ceiling in front of the front seat of the vehicle. The infrared light irradiation unit irradiates the infrared light to the driver seat and the passenger seat of the vehicle from the front upper side and the imaging unit images the driver seat and the passenger seat of the vehicle to which the infrared light is irradiated.

On the other hand, it has become more common to provide an airbag in a rear seat of the vehicle in addition to the airbag provided in the front seat along tendency of putting emphasis on safety in recent years. Examples of the airbag provided in the rear seat of the vehicle contain a side airbag or a curtain airbag provided in a side door for the rear seat of the vehicle to absorb impact from the lateral side of the vehicle and a knee airbag provided in parts in front of knees of the occupant to absorb impact against the knees. In particular, the airbag in the rear seat, especially the side airbag is nearly standardized in Europe and it is expected that the installation of the airbag in the rear seat will be much more common in various countries such as Japan, the United States and China.

When the airbag is provided in the rear seat, it is necessary to determine whether or not the airbag provided in the rear seat should be deployed and control the deployment of the airbag provided in the rear seat in addition to the determination as to whether or not the airbag provided in the front seat should be deployed and the control of the deployment of the airbag provided in the front seat. If the detection device as disclosed in the patent document 1 is used for this purpose, there is a problem that illuminance of the infrared light in the front seat irradiated by the infrared light irradiation unit and illuminance of the infrared light in the rear seat irradiated by the infrared light irradiation unit become uneven.

For example, as shown in Fig. 1, when the infrared light irradiation unit and the imaging unit are provided at the ceiling in front of the front seat of the vehicle, a distance from the infrared light irradiation unit to the front seat is shorter than a distance from the infrared light irradiation unit to the rear seat. As is well known, since illuminance of light is inversely proportional to square of a distance from a light source, the illuminance of the infrared light in a rear seat area is significantly lower than illuminance of the infrared light in a front seat area when uniform infrared light is irradiated to both of the front seat area and the rear seat area from the infrared light irradiation unit provided at one location as shown in Fig. 1.

Fig. 2 shows an infrared light irradiation area when the uniform infrared light is irradiated to both of the front seat area and the rear seat area from the infrared light irradiation unit provided at one location. It is assumed that a distance from the infrared light irradiation unit to a head of one occupant seated in the front seat is 450 mm and a distance from the infrared light irradiation unit to a head of one occupant seated in the rear seat is set to 1050 mm. As described above, the illuminance is inversely proportional to the square of the distance. Thus, when illuminance at the head of the one occupant seated in the front seat is defined as "1", illuminance at the head of the one occupant seated in the rear seat is "0.18".

In this case, the occupants seated in the front seat are bright and the occupants seated in the rear seat are dark in the image obtained by the imaging unit. Therefore, whereas an accuracy of detection for the occupants seated in the front seat is high, an accuracy of detection for the occupants seated in the rear seat is low.

On the other hand, if irradiation intensity of the infrared light irradiation unit is increased so that the occupants seated in the rear seat are sufficiently bright in the image obtained by the imaging unit, the occupants seated in the front seat become brighter than necessary in the image obtained by the imaging unit. In this case, depending on a dynamic range of a sensor device of the imaging unit, saturation occurs and thus the accuracy of the detection for the occupants seated in the front seat is reduced.

Furthermore, if the irradiation intensity of the infrared light irradiation unit is increased, a calorific value of the infrared light irradiation unit is increased. Thus, optical components (lens or the like) of an imaging optical system and a sensor of the imaging unit and the infrared light irradiation unit itself are heated by heat generated from the infrared light irradiation unit. This causes a decrease in image quality of the image obtained by the imaging unit and thereby the accuracy of the detection for the occupants is reduced.

### RELATED ART DOCUMENT

### PATENT DOCUMENT

[Patent document 1] JP 2010-203836A

### SUMMARY OF THE INVENTION

### PROBLEMS TO BE SOLVED BY THE INVENTION

The present invention has been made in view of the conventional problems mentioned above. Accordingly, it is an object of the present invention to provide a camera which includes a first light distribution member for distributing infrared light to a front seat area in a vehicle and a second light distribution member for distributing the infrared light to a rear seat area in the vehicle and which is configured so that an average value of illuminance of the infrared light in the front seat area and an average value of illuminance of the infrared light in the rear seat area are substantially equal to each other, and an occupant detection system using the camera.

### MEANS FOR SOLVING THE PROBLEMS

The above object is achieved by the present inventions defined in the following (1) to (10).
(1) A camera provided in a vehicle and used for detecting an occupant in the vehicle, comprising:
   an infrared light irradiation unit for irradiating infrared light;
   a first light distribution member for distributing the infrared light irradiated from the infrared light irradiation unit to a front seat area in the vehicle;
   a second light distribution member for distributing the infrared light irradiated from the infrared light irradiation unit to a rear seat area in the vehicle; and
   an imaging unit for imaging an inside of the vehicle irradiated by the infrared light distributed by the first light distribution member and the infrared light distributed by the second light distribution member,
   wherein the first light distribution member and the second light distribution member are configured so that an average value of illuminance of the infrared light in the front seat area and an average value of the illuminance of the infrared light in the rear seat area are substantially equal to each other.
(2) The camera according to the above (1), wherein the first light distribution member and the second light distribution member are configured so that a difference between the average value of the illuminance of the infrared light in the front seat area and the average value of the illuminance of the infrared light in the rear seat area is equal to or less than 10% of the average value of the illuminance of the infrared light in the front seat area.
(3) The camera according to the above (1) or (2), wherein the infrared light irradiation unit contains a first infrared LED for irradiating the infrared light distributed to the front seat area and a second infrared LED for irradiating the infrared light distributed to the rear seat area.
(4) The camera according to the above (3), wherein the first light distribution member is a diffusion plate provided in front of the first infrared LED, and
   wherein the second light distribution member contains a light guide component provided in front of the second infrared LED and a light distribution lens provided in front of the light guide component.
(5) The camera according to the above (3), wherein the first light distribution member contains a light guide component provided in front of the first infrared LED and a light distribution lens provided in front of the light guide component, and
   wherein the second light distribution member contains a light guide component provided in front of the second infrared LED and a light distribution lens provided in front of the light guide component.
(6) The camera according to the above (5), wherein the light guide component of the first light distribution member and the light guide component of the second light distribution member are integrated by a connecting component, and
   wherein the light distribution lens of the first light distribution member and the light distribution lens of the second light distribution member are integrated.
(7) The camera according to the above (5) or (6), wherein the light distribution lens of the first light distribution member is configured to distribute the infrared light to only a portion in the front seat area where a face and a shoulder of an occupant seated in a front seat in the vehicle are expected to be located.
(8) The camera according to the above (1) or (2), wherein the infrared light irradiation unit is constituted of one infrared LED,
   wherein the first light distribution member is a reflector provided so as to surround the infrared LED, and
   wherein the second light distribution member contains a light guide component provided in front of the infrared LED and a light distribution lens provided in front of the light guide component.
(9) The camera according to any one of the above (1) to (8), wherein the camera is provided in the vicinity of an overhead console located at a center of a ceiling of the vehicle.
(10) An occupant detection system used for detecting an occupant in a vehicle, comprising:
   the camera defined by any one of the above (1) to (9), and
   a processing unit for detecting the occupant in the vehicle based on an image obtained by the camera.

### EFFECT OF THE INVENTION

The camera of the present invention includes the first light distribution member for distributing the infrared light irradiated from the infrared light irradiation unit to the front seat area in the vehicle and the second light distribution member for distributing the infrared light irradiated from the infrared light irradiation unit to the rear seat area in the vehicle. Thus, it is possible to make the average value of the illuminance of the infrared light in the front seat area and the average value of the illuminance of the infrared light in the rear seat area substantially equal to each other.

Therefore, a brightness of the front seat area and a brightness of the rear seat area become substantially equal to each other in the image obtained by the imaging unit. As a result, it is possible to accurately perform both of detection for an occupant seated in a driver seat and/or a passenger seat contained in the front seat area and detection for an occupant seated in a rear seat contained in the rear seat area.

Further, in the camera of the present invention, the infrared light is selectively distributed to the front seat area and the rear seat area in the vehicle by the first light distribution member and the second light distribution member. Thus, it is possible to sufficiently brighten the rear seat area without increasing irradiation intensity of the infrared light irradiation unit as compared the case of increasing the irradiation intensity of the infrared light of the infrared light irradiation unit to sufficiently brighten an entire area in the vehicle. Therefore, heat generated from the infrared light irradiation unit is suppressed and it becomes possible to prevent image quality deterioration due to the heat generated from the infrared light irradiation unit. As a result, it is possible to prevent a decrease in the accuracies of both of the detection for the occupant seated in the front seat area and the detection for the occupant seated in the rear seat area.

### BRIEF DESCRITION OF THE DRAWINGS

[Fig. 1] Fig. 1 is a schematic diagram for showing an arrangement of an imaging unit and an infrared light irradiation unit in a vehicle.
[Fig. 2] Fig. 2 is a diagram for schematically showing an infrared light irradiation area in a case of uniformly irradiating infrared light to an inside of the vehicle.
[Fig. 3] Fig. 3 is a block diagram schematically showing a camera and an occupant detection system according to a first embodiment of the present invention.
[Fig. 4] Fig. 4 is a perspective view of the camera according to the first embodiment of the present invention.
[Fig. 5] Fig. 5 is a perspective view for showing an internal structure of the camera shown in Fig. 4.
[Fig. 6] Fig. 6 is a schematic diagram for showing configurations of a first light distribution member and a second light distribution member of the camera shown in Fig. 4 and a front seat area and a rear seat area to which infrared light is distributed by the first light distribution member and the second light distribution member.
[Fig. 7] Fig. 7 is a schematic diagram for showing configurations of a first light distribution member and a second light distribution member of a camera according to a second embodiment of the present invention and the front seat area and the rear seat area to which the infrared light is distributed by the first light distribution member and the second light distribution member.
[Fig. 8] Fig. 8 is a schematic diagram for showing a modified example of the camera according to the second embodiment of the present invention shown in Fig. 7.
[Fig. 9] Fig. 9 is a schematic diagram for showing configurations of a first light distribution member and a second light distribution member of a camera according to a third embodiment of the present invention and the front seat area and the rear seat area to which the infrared light is distributed by the first light distribution member and the second light distribution member.

### DETAILED DESCRIPTION OF THE PREFERRED EMBODIMENTS

Hereinafter, a camera and an occupant detection system of the present invention will be described with reference to preferred embodiments shown in the accompanying drawings. In each figure, components having same or similar functions are denoted by the same reference number.

### <First embodiment>

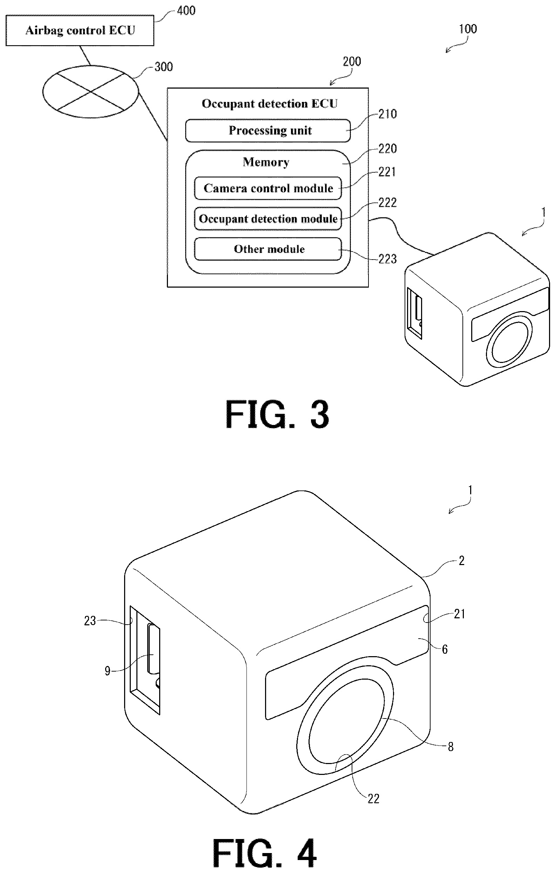

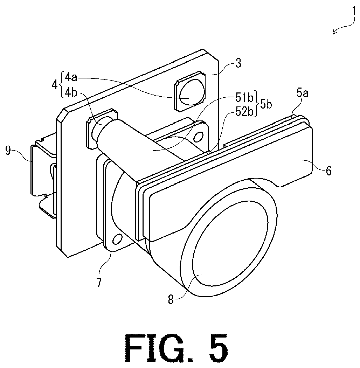

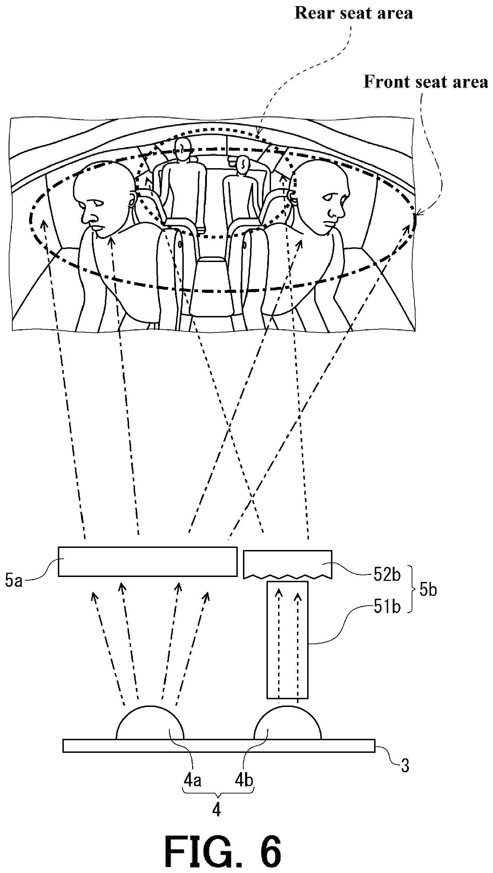

First, a camera and an occupant detection system according to a first embodiment of the present invention will be described in detail with reference to Figs. 3 to 6. Fig. 3 is a block diagram schematically showing the camera and the occupant detection system according to the first embodiment of the present invention. Fig. 4 is a perspective view of the camera according to the first embodiment of the present invention. Fig. 5 is a perspective view for showing an internal structure of the camera shown in Fig. 4. Fig. 6 is a schematic diagram for showing configurations of a first light distribution member and a second light distribution member of the camera shown in Fig. 4 and a front seat area and a rear seat area to which infrared light is distributed by the first light distribution member and the second light distribution member.

In the following description, an upper side of each of Figs. 4 and 5 is referred to as "an upper" or "an upper side", a lower side of each of Figs. 4 and 5 is referred to as "a lower" or "a lower side", a front right side of the paper of Figs. 4 and 5 is referred to as "a front" or "a front side" and a rear left side of the paper of Figs. 4 and 5 is referred to as "a rear" or "a rear side".

An occupant detection system 100 shown in Fig. 3 is used for detecting an occupant in a vehicle. The occupant detection system 100 contains a camera 1 for imaging an inside of the vehicle and an occupant detection ECU (electronic control unit) 200 for detecting the occupant in the vehicle based on an image obtained by the camera 1. In the following description, although the occupant detection system 100 and the camera 1 of the present invention will be described in detail as assuming that they are used in a vehicle having one line of rear seats, it is noted that the occupant detection system 100 and the camera 1 of the present invention can be used in a vehicle (e.g., a wagon-type vehicle) having a plurality of line of rear seats.

The camera 1 is provided at a ceiling in front of a front seat (a driver seat and/or a passenger seat) in the vehicle, that is, provided in the vicinity of an overhead console located at a center of the ceiling of the vehicle (for example, a portion where the imaging unit and the infrared light irradiation unit shown in Fig. 1 are provided). The camera 1 is used for imaging a front seat area and a rear seat area in the vehicle to which infrared light is irradiated. The term of "front seat area" used in the specification refers to a front-side area in the vehicle that covers portions where a face and a shoulder of an occupant seated in the driver seat or the passenger seat are expected to be located. The term of "rear seat area" used in the specification refers to a rear-side area in the vehicle that covers portions where a face and a shoulder of an occupant seated in the rear seat are expected to be located.

As shown in Figs. 4 and 5, the camera 1 includes a case 2, a substrate 3 provided in the case 2, an infrared light irradiation unit 4 containing a first infrared LED 4a and a second infrared LED 4b provided on a first surface of the substrate 3, a first light distribution member 5a provided in front of the first infrared LED 4a, a second light distribution member 5b provided in front of the second infrared LED 4b, a cover glass 6 provided in front of the first light distribution member 5a and the second light distribution member 5b and exposed to an outside from a substantially rectangular opening 21 formed in a front surface of the case 2, an image sensor 7 provided on the first surface of the substrate 3, an imaging optical system 8 provided in front of the image sensor 7 and exposed to the outside from a circular opening 22 formed in the front surface of the case 2 and a connector 9 provided on a second surface of the substrate 3.

The imaging optical system 8 forms an optical image of the inside of the vehicle to which the infrared light from the first infrared LED 4a and the second infrared LED 4b of the infrared light irradiation unit 4 is irradiated on an imaging surface of the image sensor 7. Further, the image sensor 7 images the optical image formed on the imaging surface of the image sensor 7 to obtain an image (which is data) of the inside of the vehicle to which the infrared light is irradiated. Thus, in the camera 1, the image sensor 7 and the imaging optical system 8 constitute an imaging unit for imaging the inside of the vehicle to which the infrared light from the first infrared LED 4a and the second infrared LED 4b is irradiated.

As shown in Fig. 4, the case 2 has a substantially cubic shape. The case 2 has a function of containing each component of the camera 1 therein. The case 2 has the substantially rectangular opening 21 which is formed in an upper portion of the front surface of the case 2 for fitting the cover glass 6 therein and the circular opening 22 formed in the front surface of the case 2 for exposing a tip portion of the imaging optical system 8 to the outside. Further, a wiring opening 23 through which a wire to be connected to the connector 9 should be passed is formed in one side surface of the case 2 in order to provide a wired connection with the occupant detection ECU 200.

As shown in Fig. 5, the substrate 3 is a substantially square plate-like member. The substrate 3 is fixedly provided in the case 2 so that the first surface of the substrate 3 faces the front surface of the case 2 and the second surface of the substrate 3 faces a rear surface of the case 2. The infrared light irradiation unit 4 is mounted at an upper portion of the first surface of the substrate 3 and the image sensor 7 is mounted at a portion of the first surface of the substrate 3 located on the lower side of the infrared light irradiation unit 4. Further, the connector 9 is mounted on the second surface of the substrate 3. Transmission and reception of data and signals between the occupant detection ECU 200 and the components of the camera 1 mounted on the substrate 3 (that is, the infrared light irradiation unit 4 and the image sensor 7) are performed through the wire connected to the connector 9 mounted on the second surface of the substrate 3. Furthermore, electric power is supplied to the components of the camera 1 through the wire connected to the connector 9 mounted on the second surface of the substrate 3 for driving the components of the camera 1.

The infrared light irradiation unit 4 has a function of irradiating the infrared light to the inside of the vehicle. The infrared light irradiation unit 4 is mounted on the first surface of the substrate 3. In the present embodiment, the infrared light irradiation unit 4 contains the first infrared LED 4a for irradiating the infrared light to be distributed to the front seat area in the vehicle and the second infrared LED 4b for irradiating the infrared light to be distributed to the rear seat area in the vehicle. The first infrared LED 4a and the second infrared LED 4b are the same kind of infrared LED and have the same performance. The first infrared LED 4a and the second infrared LED 4b irradiate the infrared light in response to signals transmitted from the occupant detection ECU 200 through the wire connected to connector 9. Specifically, the first infrared LED 4a and the second infrared LED 4b irradiate the infrared light in accordance with an imaging timing of the camera 1.

The first light distribution member 5a has a function of distributing the infrared light irradiated from the first infrared LED 4a to the front seat area in the vehicle. In the present embodiment, the first light distribution member 5a is a diffuser plate provided in front of the first infrared LED 4a of the infrared light irradiation unit 4. The first light distribution member 5a is fixed on a rear surface (a surface facing the first surface of the substrate 3) of the cover glass 6 fitted in the substantially rectangular opening 21 formed in the front surface of the case 2 by a fixing tool such as a screw. The first light distribution member 5a is configured to diffuse the irradiated infrared light to distribute the infrared light to the front seat area in the vehicle when the infrared light is irradiated from the first infrared LED 4a with respect to the first light distribution member 5a. The infrared light diffused by the first light distribution member 5a passes through the cover glass 6. As a result, the infrared light is distributed to the front seat area in the vehicle.

The second light distribution member 5b has a function of distributing the infrared light irradiated from the second infrared LED 4b to the rear seat area in the vehicle. The second light distribution member 5b contains a light guide component 51b provided in front of the second infrared LED 4b and a light distribution lens 52b provided in front of the light guide component 51b. The light guide component 51b has a function as a light guide path for guiding the infrared light irradiated from the second infrared LED 4b to the light distribution lens 52b. The light guide component 51b is fixed with respect to the second infrared LED 4b and the light distribution lens 52b by a bonding method with an adhesive or a fixing method with an appropriate fixing tool. The light distribution lens 52b is configured to distribute the infrared light irradiated from the second infrared LED 4b and guided by the light guide component 51b to the rear seat area in the vehicle. The infrared light passing through the light distribution lens 52b of the second light distribution member 5b passes through the cover glass 6. As a result, the infrared light is distributed to the rear seat area in the vehicle.

In this regard, each of the first light distribution member 5a (the diffuser plate) and the light guide component 51b and the light distribution lens 52b of the second light distribution member 5b can be formed with a transparent material such as a transparent glass and a transparent resin which is transparent to light having a wavelength in the infrared range.

As shown in Fig. 6, the infrared light irradiated from the first infrared LED 4a is diffused by the first light distribution member (the diffuser plate) 5a. As a result, the infrared light is distributed to the front seat area in the vehicle. Further, the infrared light irradiated from the second infrared LED 4b passes through the light guide component 51b of the second light distribution member 5b and then distributed to the rear seat area in the vehicle by the light distribution lens 52b of the second light distribution member 5b.

The first light distribution member 5a and the second light distribution member 5b are configured so that an average value of illuminance of the infrared light in the front seat area and an average value of illuminance of the infrared light in the rear seat area are substantially equal to each other. Specifically, the first light distribution member 5a and the second light distribution member 5b are configured so that a difference between the average value of the illuminance of the infrared light in the front seat area and the average value of the illuminance of the infrared light in the rear seat area is preferably equal to or less than 10%, more preferably equal to or less than 5% and much more preferably equal to or less than 1% of the average value of the illuminance of the infrared light in the front seat area. Such characteristics can be realized by adjusting infrared light diffusion performance of the first light distribution member (the diffuser plate) 5a and infrared light distribution performance of the light distribution lens 52b of the second light distribution member 5b at the time of designing the first light distribution member 5a and the second light distribution member 5b.

By using the first light distribution member 5a and the second light distribution member 5b configured as described above, it is possible to make the average value of the illuminance of the infrared light in the front seat area in the vehicle and the average value of the illuminance of the infrared light in the rear seat area in the vehicle substantially equal to each other. Therefore, when the imaging unit (the imaging optical system 8 and the image sensor 7) images the inside of the vehicle to which the infrared light is irradiated, a brightness of the front seat area and a brightness of the rear seat area become substantially equal to each other in the image obtained by the imaging unit. The occupant detection ECU 200 uses this image in which the brightness of the front seat area and the brightness of the rear seat area are substantially equal to each other to perform both of the detection for the occupant seated in the driver seat and/or the passenger seat contained in the front seat area and the detection for the occupant seated in the rear seat contained in the rear seat area. Thus, it is possible to accurately perform both of the detection for the occupant seated in the driver seat and/or the passenger seat contained in the front seat area and the detection for the occupant seated in the rear seat contained in the rear seat area.

Further, the infrared light irradiation unit 4 (the first infrared LED 4a and the second infrared LED 4b), the first light distribution member 5a and the second light distribution member 5b are configured so that each of the average value of the illuminance of the infrared light in the front seat area and the average value of the illuminance of the infrared light in the rear seat area is preferably equal to or more than 40 mW and more preferably equal to or more than 60 mW. By configuring the infrared light irradiation unit 4, the first light distribution member 5a and the second light distribution member 5b so that each of the average value of the illuminance of the infrared light in the front seat area and the average value of the illuminance of the infrared light in the rear seat area is equal to or more than the above value, the front seat area and the rear seat area become bright in the image enough to allow the occupant detection ECU 200 to perform a process for the occupant detection. Therefore, it is possible to accurately perform both of the detection for the occupant seated in the driver seat and/or the passenger seat contained in the front seat area and the detection for the occupant seated in the rear seat contained in the rear seat area.

Referring back to Fig. 5, the cover glass 6 is fitted in the substantially rectangular opening 21 formed in the front surface of the case 2. The cover glass 6 protects the first light distribution member 5a or the second light distribution member 5b and prevents dusts from entering into the camera 1. The infrared light irradiated from the infrared light irradiation unit 4 and passing through the first light distribution member 5a or the second light distribution member 5b is distributed to the inside of the vehicle through the cover glass 6. Similar to the first light distribution member 5a and the second light distribution member 5b, the cover glass 6 can be formed with a transparent material such as a transparent glass and a transparent resin which is transparent to light having a wavelength in the infrared range.

The image sensor 7 has a function of imaging the optical image formed by the imaging optical system 8 provided in front of the image sensor 7 to obtain the image of the inside of the vehicle to which the infrared light is irradiated. The image sensor 7 is mounted at a portion of the first surface of the substrate 3 and located on the lower side of the infrared light irradiation unit 4. The image sensor 7 is a monochrome sensor configured to be capable of imaging the infrared light. The image sensor 7 images the optical image formed by the imaging optical system 8 in response to a signal transmitted from the occupant detection ECU 200 through the wire connected to the connector 9 to obtain the image. The imaging by the image sensor 7 is performed at an arbitrary timing such as a timing of activating an engine of the vehicle or at predetermined time intervals (for example, once every 10 minutes, etc.) during the driving of the vehicle in response to the signal transmitted from the occupant detection ECU 200.

The image obtained by the image sensor 7 is transmitted to the occupant detection ECU 200 through the wire connected to the connector 9. The image sensor 7 is not particularly limited as long as it is a monochrome sensor which is capable of imaging the infrared light. For example, a CMOS image sensor or a CCD image sensor can be used as the image sensor 7.

The imaging optical system 8 is constituted of one or more lenses and optical elements such as an aperture. The imaging optical system 8 is provided in front of the image sensor 7. The tip portion of the imaging optical system 8 is exposed to the outside of the case 2 through the circular opening 22 formed in the front surface of the case 2. The optical image is formed on the imaging surface of the image sensor 7 by the imaging optical system 8. The imaging optical system 8 is configured to exhibit high resolution power with respect to the light having the wavelength in the infrared range. Further, the imaging optical system 8 is a wide-angle lens configured so that a total angle of view in the horizontal direction is equal to or more than 120° in order to enable the camera 1 to image a wide area containing the front seat area and the rear seat area in the vehicle.

The connector 9 is mounted on the second surface of the substrate 3. The connector 9 has a function of providing the wired connection between the camera 1 and the occupant sensing ECU 200. As shown in Fig. 4, the connector 9 is exposed to the outside of the case 2 through the wiring opening 23 formed in the side surface of the case 2. The wire from the occupant detection ECU 200 is connected to the connector 9 through the wiring opening 23. As described above, the transmission and reception of data or signals between the occupant detection ECU 200 and the components of the camera 1 (the infrared light irradiation unit 4 and the image sensor 7) mounted on the substrate 3 is performed through the wire from the occupant detection ECU 200 connected to the connector 9. Further, the electric power is supplied to the components of the camera 1 through the wire connected to the connector 9 for driving the components of the camera 1. In this regard, the transmission and reception of data and signals between any other ECU provided in the vehicle (for example, an ECU for controlling the whole of the vehicle or an airbag control ECU 400) and the components of the camera 1 is also performed with the wire connected to the connector 9 through the occupant detection ECU 200.

As described above, since the camera 1 of the present invention contains the first light distribution member 5a and the second light distribution member 5b, it is possible to make the average value of the illuminance of the infrared light in the front seat area in the vehicle and the average value of the illuminance of the infrared light in the rear seat area in the vehicle substantially equal to each other when the camera 1 images the inside of the vehicle. Therefore, the brightness of the front seat area and the brightness of the rear seat area are substantially equal to each other in the image obtained by imaging the inside of the vehicle to which the infrared light is irradiated with the imaging unit (the image sensor 7 and the imaging optical system 8) of the camera 1. The occupant detection ECU 200 can use the image in which the brightness of the front seat area and the brightness of the rear seat area are substantially equal to each other to perform both of the detection for the occupant seated in the driver seat and/or the passenger seat contained in the front seat area and the detection for the occupant seated in the rear seat contained in the rear seat area. Thus, it is possible to improve the accuracies of both of the detection for the occupant seated in the driver seat and/or the passenger seat contained in the front seat area and the detection for the occupant seated in the rear seat contained in the rear seat area.

Further, according to the camera 1 of the present invention, the infrared light is selectively distributed to the front seat area and the rear seat area in the vehicle by the first light distribution member 5a and the second light distribution member 5b. Therefore, it is possible to sufficiently brighten the rear seat area without increasing the irradiation intensity of the infrared light irradiated from the infrared light irradiation unit 4 as compared with the case of increasing the irradiation intensity of the infrared light irradiated from the infrared light irradiation unit 4 to sufficiently brighten the entire of the inside of the vehicle. Therefore, the heat generation from the infrared light irradiation unit 4 is suppressed and thereby it is possible to prevent the image quality from deteriorating due to the heat generated from the infrared light irradiation unit 4. As a result, it is possible to prevent a decrease in the accuracies of both of the detection for the occupant seated in the driver seat and/or the passenger seat contained in the front seat area and the detection for the occupant seated in the rear seat contained in the rear seat area, which are performed by the occupant detection ECU 200.

Next, referring back to Fig. 3, the occupant detection ECU 200 contained in the occupant detection system 100 of the present invention will be described in detail. The occupant detection ECU 200 is one of various ECUs provided in the vehicle. Although the occupant detection ECU 200 is described as a single ECU in the illustrated embodiment, the occupant detection ECU 200 may be practiced in one ECU which integrally controls various devices (such as an engine and airbags) relating to the vehicle.

The occupant detection ECU 200 is connected to the camera 1 through the wired connection as described above. Further, the occupant detection ECU 200 forms an in-vehicle network (CAN: Controller Area Network) 300 together with other ECUs provided in the vehicle. When the occupant detection ECU 200 receives the image obtained by the camera 1 through the wire connected to the connector 9 of the camera 1, the occupant detection ECU 200 performs both of the detection for the occupant seated in the driver seat and/or passenger seat contained in the front seat area and the detection for the occupant seated in the rear seat contained in the rear seat area. A result of the detection for the occupants in the vehicle by the occupant detection ECU 200 is transmitted to the airbag control ECU 400 connected to the occupant detection ECU 200 through the in-vehicle network 300. With this configuration, the airbag control ECU 400 can perform the determination for the necessity of the deployment of the airbags provided in the front seat (the driver seat and the passenger seat) and the rear seat and control the deployment of the airbags when an accident occurs.

As shown in Fig. 3, the occupant detection ECU 200 includes a processing unit 210 for performing the control of the camera 1, the process for detecting the occupants in the vehicle and other necessary processes and a memory 220 for storing data, programs, modules and the like required for allowing the processing unit 210 to perform various processes.

The processing unit 210 uses the data, the programs, the modules and the like stored in the memory 220 to perform the processes of the occupant detection ECU 200. For example, the processing unit 210 is one or more processing units such as microprocessors, microcomputers, microcontrollers, digital signal processors (DSPs), central processing units (CPUs), memory control units (MCUs), graphic processing units (GPUs), state machines, logic circuitries, application specific integrated circuits (ASICs) and combinations thereof that can perform operational processes for manipulating signals or the like based on computer-readable instructions. Among other functions, the processing unit 210 is configured to fetch computer-readable instructions (e.g., data, programs, modules, etc.) stored in the memory 220 to perform signal manipulation and signal control.

The memory 220 is a removable or non-removable computer readable medium containing a volatile storage medium (e.g., RAM, SRAM, DRAM), a non-volatile storage medium (e.g., ROM, EPROM, EEPROM, flash memory, hard disk, optical disc, CD-ROM, digital versatile disc (DVD), magnetic cassette, magnetic tape, magnetic disk) and a combination thereof.

The memory 220 stores a plurality of modules that can be executed by the processing unit 210. Each of the plurality of modules stored in memory 220 is a computer readable instruction executable by processing unit 210, such as a routine, an application, a program, an algorithm, a library, an object, a component, a data structure or combinations thereof.

The memory 220 stores a camera control module 221 for controlling the camera 1 to allow the camera 1 to perform the imaging at the arbitrary timing or at the predetermined time intervals, an occupant detection module 222 for performing both of the detection for the occupant seated in the driver seat and/or the passenger seat contained in the front seat area and the detection for the occupant seated in the rear seat contained in the rear seat area with an image obtained by the camera 1 and another module 223 for performing other processes and other controls of the occupant detection ECU 200. The processing unit 210 can perform a desired process by using each module stored in the memory 220.

The camera control module 221 is used by the processing unit 210 to perform processes for the imaging of the camera 1 and the like at the arbitrary timing or at the predetermined time intervals. Specifically, the processing unit 210 can use the camera control module 221 in the memory 220 to instruct the infrared light irradiation unit 4 of the camera 1 to irradiate the infrared light and instruct the image sensor 7 of the camera 1 to image the inside of the vehicle. The image obtained by the camera 1 is transmitted to the occupant detection ECU 200 through the wire connected to the connector 9 of the camera 1.

For example, the processing unit 210 uses the camera control module 221 to allow the camera 1 to image the inside of the vehicle at the arbitrary timing (for example, a timing when the engine of the vehicle is activated or a timing when a door of the vehicle is opened or closed) or at the predetermined time intervals (for example, once every 10 minutes and once an hour) during the driving.

The occupant detection module 222 is used by the processing unit 210 for performing both of the detection for the occupant seated in the driver seat and/or the passenger seat contained in the front seat area and the detection for the occupant seated in the rear seat contained in the rear seat area with the image obtained by the camera 1. A method of detecting the occupants in the vehicle performed by the processing unit 210 using the occupant detection module 222 is not particularly limited. Various methods known in the art can be used to detect the occupant seated in the driver seat and/or passenger seat contained in the front seat area and the occupant seated in the rear seat contained in the rear seat area.

For example, the processing unit 210 uses the occupant detection module 222 to perform a face detection process using an arbitrary algorithm with respect to the image obtained by the camera 1. When a face is detected in the front seat area or the rear seat area, the processing unit 210 determines that the occupant is present in the seat corresponding to a portion where the face is detected. Further, when the face of the occupant is detected by using the occupant detection module 222, the processing unit 210 determines a body shape and a posture of the occupant based on a positional relationship between the face and the shoulder of the occupant. The presence or absence of the occupant in each seat and the information on the body shape and the posture of the occupant are transmitted to the airbag control ECU 400 and the other ECUs provided in the vehicle through the in-vehicle network 300 as a result of the occupant detection. The airbag control ECU 400 can determine whether or not the airbags in the front seat (the driver seat or the passenger seat) and the rear seat should be deployed and control the deployment of the airbags when an accident occurs based on the result of the occupant detection received from the occupant detection ECU 200.

As described above, the first light distribution member 5a and the second light distribution member 5b of the camera 1 make the average value of the illuminance of the infrared light in the front seat area in the vehicle and the average value of the illuminance of the infrared light in the rear seat area in the vehicle substantially equal to each other at the time of the imaging of the camera 1. Therefore, the brightness of the front seat area is substantially equal to the brightness of the rear seat area in the image obtained by the camera 1. The occupant detection ECU 200 can use the image in which the brightness of the front seat area and the brightness of the rear seat area are substantially equal to each other to accurately perform both of the detection for the occupant seated in the driver seat and/or the passenger seat contained in the front seat area and the detection for the occupant seated in the rear seat contained in the rear seat area.

Although only one first infrared LED 4a and only one second infrared LED 4b are used in the illustrated embodiment, the present invention is not limited thereto. The scope of the present disclosure also involves an aspect that the infrared light irradiation unit 4 contains a plurality of first infrared LEDs 4a and a plurality of second infrared LEDs 4b. In this case, the camera 1 includes a plurality of first light distribution members 5a by a number corresponding to the number of the first infrared LEDs 4a and a plurality of second light distribution members 5b by a number corresponding to the number of second infrared LEDs 4b.

### <Second embodiment>

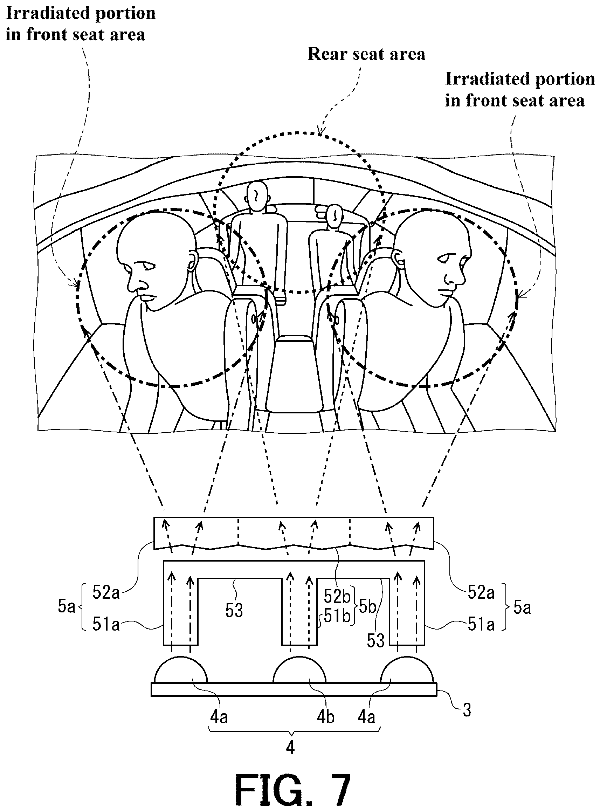

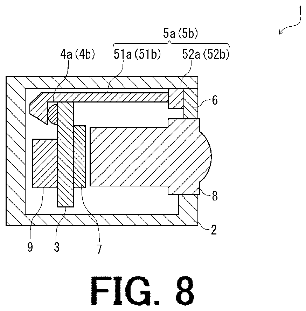

Next, a camera and an occupant detection system according to a second embodiment of the present invention will be described in detail with reference to Figs. 7 and 8. Fig. 7 is a schematic diagram for showing configurations of a first light distribution member and a second light distribution member of the camera according to the second embodiment of the present invention and the front seat area and the rear seat area to which the infrared light is distributed by the first light distribution member and the second light distribution member. Fig. 8 is a schematic diagram for showing a modified example of the camera according to the second embodiment of the present invention shown in Fig. 7.

Hereinafter, the camera and the occupant detection system of the second embodiment will be described by placing emphasis on the points differing from the camera and the occupant detection system of the first embodiment with the same matters being omitted from the description. The camera and the occupant detection system of the present embodiment have the same configurations as those of the camera and the occupant detection system of the first embodiment except that the configurations of the infrared light irradiation unit, the first light distribution member and the second light distribution member of the camera are modified.

As shown in Fig. 7, the infrared light irradiation unit 4 of the camera 1 of the present embodiment contains two first infrared LEDs 4a and one second infrared LED 4b. The two first infrared LEDs 4a are mounted at both edge side portions on the first surface of the substrate 3. The one second infrared LED 4b is mounted between the two first infrared LEDs 4a on the first surface of the substrate 3.

The camera 1 of the present embodiment includes two first light distribution members 5a. The two first light distribution members 5a respectively correspond to the two first infrared LEDs 4a. Each of the first light distribution members 5a includes a light guide component 51a provided in front of the corresponding first infrared LED 4a and a light distribution lens 52a provided in front of the light guide component 51a. The light guide component 51a and the light distribution lens 52a of each of the first light distribution members 5a are formed with the same material as that of the light guide component 51b and the light distribution lens 52b of the second light distribution member 5b.

The light guide component 51a of each of the first light distribution members 5a has a function as a light guide path for guiding the infrared light irradiated from the corresponding first infrared LED 4a to the corresponding light distribution lens 52a. The light guide component 51a is fixed with respect to the corresponding first infrared LED 4a and the corresponding light distribution lens 52a by a bonding method with an adhesive or a fixing method with an arbitrary fixing tool. The light distribution lens 52a of each of the first light distribution members 5a is configured to distribute the infrared light irradiated from the corresponding first infrared LED 4a and guided by the corresponding light guide component 51a to the front seat area in the vehicle.

In particular, in the present embodiment, each of the light distribution lenses 52a of the two first light distribution members 5a is configured to distribute the infrared light guided by the corresponding light guide component 51a to only a portion where the face and the shoulder of the occupant seated in the front seat are expected to be located as shown in Fig. 7. For example, the light distribution lens 52a of the first light distribution member 5a for the first infrared LED 4a located on the left side in Fig. 7 is configured to distribute the infrared light guided by the light guide component 51a to only the portion in the front seat area where the face and the shoulder of the occupant seated in the left-side seat of the two front seats are expected to be located. On the other hand, the light distribution lens 52a of the first light distribution member 5a for the first infrared LED 4a located on the right side in Fig. 7 is configured to distribute the infrared light guided by the light guide component 51a to only the portion in the front seat area where the face and the shoulder of the occupant seated in the right-side seat of the two front seats are expected to be located.

In the present embodiment, the first light distribution members 5a and the second light distribution member 5b are configured so that the average value of the illuminance of the infrared light in each of the portions in the front seat area to which the infrared light is distributed and the average value of the illuminance of the infrared light in the rear seat area are substantially equal to each other. Specifically, the first light distribution members 5a and the second light distribution member 5b are configured so that a difference between the average value of the illuminance of the infrared light in each of the portions in the front seat area to which the infrared light is distributed and the average value of the illuminance of the infrared light in the rear seat area is preferably equal to or less than 10%, more preferably equal to or less than 5% and much more preferably equal to or less than 1% of the average value of the illuminance of the infrared light in each of the portions in the front seat area to which the infrared light is distributed.

Further, the infrared light irradiation unit 4 (the first infrared LEDs 4a and the second infrared LED 4b), the first light distribution members 5a and the second light distribution member 5b are configured so that each of the average value of the illuminance of the infrared light in each of the portions in the front seat area to which the infrared light is distributed and the average value of the illuminance of the infrared light in the rear seat area is preferably equal to or more than 40 mW and more preferably equal to or more 60 mW.

As described above, the present embodiment uses the plurality of first infrared LEDs 4a and the plurality of first light distribution members 5a to distribute the infrared light to only the limited portions in the front seat area in the vehicle. Therefore, unlike the case of irradiating the infrared light to the entire of the front seat area in the vehicle using one first infrared LED 4a, the infrared light in the present embodiment of the present invention is not irradiated to portions which are not required to be irradiated by the infrared light for the detection for the occupant. Therefore, it is possible to brighten the portions required for the detection for the occupant with less power consumption. Thus, the present invention has an advantage in terms of the power consumption.

Further, in the present embodiment, since a light distribution area of the infrared light irradiated from each first infrared LED 4a is narrow, it is possible to sufficiently brighten the portions in the front seat area required for the detection for the occupant even if the irradiation intensity of the infrared light of each first infrared LED 4a is low. Therefore, it is possible to use an infrared LED whose output power is low (irradiation intensity is weak) as each of the first infrared LEDs 4a. In general, an infrared LED whose output power is high is expensive. Therefore, by using a plurality of inexpensive and low-power infrared LEDs to distribute the infrared light to the front seat area for brightening the front seat area, it is possible to reduce the cost of the camera 1 as compared with the case of using one expensive and high-power infrared LED to distribute the infrared light to the front seat area for brightening the front seat area.

Further, in the present embodiment, the light guide components 51a and the light guide component 51b are respectively provided for the first infrared LEDs 4a and the second infrared LED 4b. As described above, since the light guide paths can be freely set for each of the infrared LEDs in the present embodiment, it is possible to improve design flexibility for the arrangements of the first infrared LEDs 4a and the second infrared LED 4b on the substrate 3 and this enables the space-saving of the substrate 3.

For example, Fig. 8 shows a modified example of the camera 1 in which the first infrared LEDs 4a and the second infrared LED 4b are mounted on the second surface of the substrate 3. Each of the light guide components 51a, 51b has a substantially J shape whose one end portion is located in front of each of the corresponding infrared LEDs and other end portion faces the corresponding light distribution lens 52a, 52b provided on the rear side of the cover glass 6. In this case, since the first infrared LEDs 4a and the second infrared LED 4b can be mounted on the second surface of the substrate 3 which is not utilized in the above-described first embodiment, it is possible to achieve the space-saving of the substrate 3.

Further, in the present embodiment, the light guide components 51a of the two first light distribution members 5a and the light guide component 51b of the second light distribution member 5b are integrated by a connecting component 53 for connecting the light guide components 51a, 51b with each other. Further, the light distribution lenses 52a of the two first light distribution members 5a and the light distribution lens 52b of the second light distribution member 5b are also integrated by a bonding method with an adhesive or an integral molding method.

Although the number of the first infrared LEDs 4a is two in the present embodiment, the present invention is not limited thereto. An aspect in which three or more first infrared LEDs 4a are mounted on the substrate 3 is also within the scope of the present invention. In this case, the camera 1 includes a plurality of first light distribution members 5a by a number corresponding to the number of the first infrared LEDs 4a.

Further, although the number of the second infrared LED 4b is one in the present invention, the present invention is not limited thereto. An aspect in which a plurality of second infrared LEDs 4b and a plurality of second light distribution members 5b are used to distribute the infrared light to only a portion in the rear seat area where the face and the shoulder of the occupant seated in the rear seat are expected to be located. In this case, the camera 1 includes a plurality of second light distribution members 5b by a number corresponding to the number of the second infrared LEDs 4b. The light distribution lens 52b of each of the second light distribution members 5b is configured to distribute the infrared light guided by the corresponding light guide component 51b to only the portion in the rear seat area where the face and the shoulder of the occupant seated in the rear seat are expected to be located.

The camera 1 having the above-described configuration and the occupant detection system 100 including this camera 1 can also provide the same effects as those of the camera 1 and the occupant detection system 100 of the above-described first embodiment.

### <Third embodiment>

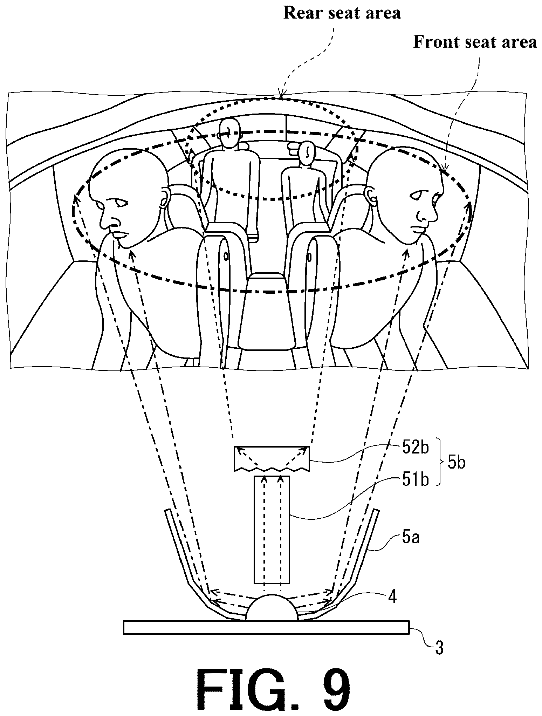

Next, a camera and an occupant detection system according to a third embodiment of the present invention will be described in detail with reference to Fig. 9. Fig. 9 is a schematic diagram for showing configurations of a first light distribution member and a second light distribution member of the camera according to the third embodiment of the present invention and the front seat area and the rear seat area to which the infrared light is distributed by the first light distribution member and the second light distribution member.

Hereinafter, the camera and the occupant detection system of the third embodiment will be described by placing emphasis on the points differing from the camera and the occupant detection system of the first embodiment with the same matters being omitted from the description. The camera and the occupant detection system of the present embodiment have the same configurations as those of the camera and the occupant detection system of the first embodiment except that the configurations of the infrared light irradiation unit, the first light distribution member and the second light distribution member of the camera are modified.

As shown in Fig. 9, the infrared light irradiation unit 4 of the camera 1 of the present embodiment is constituted of one infrared LED. Further, the first light distribution member 5a is a bowl-type reflector provided so as to surround the one infrared LED. A curved surface of the reflector is configured to distribute infrared light delivering from the one infrared LED toward the curved surface of the reflector to the front seat area in the vehicle.

The second light distribution member 5b contains a light guide component 51b provided in front of the one infrared LED and a light distribution lens 52b provided in front of the light guide component 51b. The light guide component 51b is configured to serve as a light guide path for guiding the infrared light delivering from the vicinity of a center of the one infrared LED to the light distribution lens 52b. The light distribution lens 52b is configured to distribute the infrared light guided by the light guide component 51b to the rear seat area.

In the present embodiment, the infrared light delivering from the vicinity of the center of the infrared LED and having relatively high irradiation intensity is distributed to the rear seat area which is far from the infrared LED. On the other hand, the infrared light radially delivering toward the reflector from the infrared LED and having relatively low irradiation intensity is distributed to the front seat area which is near to the infrared LED through the reflector. Therefore, it is possible to efficiently brighten both of the front seat area and the rear seat area in the vehicle with the one infrared LED.

The camera 1 having the above-described configuration and the occupant detection system 100 including this camera 1 can also provide the same effects as those of the camera 1 and the occupant detection system 100 of the above-described first embodiment.

Although the camera and the occupant detection system of the present invention has been described above based on the illustrated embodiments, the present invention is not limited thereto. Each configuration of the present invention can be replaced with any configuration capable of performing the same function or any configuration can be added to each configuration of the present invention.

A person having skill in the art and the field to which the present invention belongs would be able to carry out modifications of the described configuration of the camera and the occupant detection system of the present invention without meaningfully departing from the principles, ideas and scope of the present invention. Further, cameras and occupant detection systems having modified configurations are also involved within the scope of the present invention. For example, an aspect in which the cameras of the first to third embodiments are arbitrarily combined is also involved within the scope of the present invention.

Further, the number and the type of the components of the camera and the occupant detection system shown in Figs. 4 to 9 are merely illustrative example and the invention is not necessarily limited thereto. An aspect in which any component is added or combined or any component is omitted without departing from the principle and intent of the present invention is also involved within the scope of the present invention. Further, each component of the occupant detection system may be practiced by a hardware, a software or a combination thereof.

### INDUSTRIAL APPLICABILITY

The camera of the present invention includes the first light distribution member for distributing the infrared light irradiated from the infrared light irradiation unit to the front seat area in the vehicle and the second light distribution member for distributing the infrared light irradiated from the infrared light irradiation unit to the rear seat area in the vehicle. Thus, it is possible to make the average value of the illuminance of the infrared light in the front seat area and the average value of the illuminance of the infrared light in the rear seat area substantially equal to each other. Therefore, according to the camera of the present invention, the brightness of the front seat area and the brightness of the rear seat area become substantially equal to each other in the image obtained by the imaging unit. As a result, it is possible to accurately perform both of the detection for the occupant seated in the driver seat and/or the passenger seat contained in the front seat area and the detection for the occupant seated in the rear seat contained in the rear seat area.

Further, in the camera of the present invention, the infrared light is selectively distributed to the front seat area and the rear seat area in the vehicle by the first light distribution member and the second light distribution member. Thus, it is possible to sufficiently brighten the rear seat area without increasing the irradiation intensity of the infrared light irradiation unit as compared with the case of increasing the irradiation intensity of the infrared light of the infrared light irradiation unit to sufficiently brighten the entire area in the vehicle. Therefore, the heat generation from the infrared light irradiation unit is suppressed and it becomes possible to prevent the image quality deterioration due to the heat generated from the infrared light irradiation unit. As a result, it is possible to prevent the decrease in the accuracies of both of the detection for the occupant seated in the front seat area and the detection for the occupant seated in the rear seat area. Thus, the present invention has industrial applicability.

## Claims

1. A camera provided in a vehicle and used for detecting an occupant in the vehicle, comprising:
an infrared light irradiation unit for irradiating infrared light;
a first light distribution member for distributing the infrared light irradiated from the infrared light irradiation unit to a front seat area in the vehicle;
a second light distribution member for distributing the infrared light irradiated from the infrared light irradiation unit to a rear seat area in the vehicle; and
an imaging unit for imaging an inside of the vehicle irradiated by the infrared light distributed by the first light distribution member and the infrared light distributed by the second light distribution member,
wherein the first light distribution member and the second light distribution member are configured so that an average value of illuminance of the infrared light in the front seat area and an average value of the illuminance of the infrared light in the rear seat area are substantially equal to each other.

2. The camera as claimed in claim 1, wherein the first light distribution member and the second light distribution member are configured so that a difference between the average value of the illuminance of the infrared light in the front seat area and the average value of the illuminance of the infrared light in the rear seat area is equal to or less than 10% of the average value of the illuminance of the infrared light in the front seat area.

3. The camera as claimed in claim 1 or 2, wherein the infrared light irradiation unit contains a first infrared LED for irradiating the infrared light distributed to the front seat area and a second infrared LED for irradiating the infrared light distributed to the rear seat area.

4. The camera as claimed in claim 3, wherein the first light distribution member is a diffusion plate provided in front of the first infrared LED, and
wherein the second light distribution member contains a light guide component provided in front of the second infrared LED and a light distribution lens provided in front of the light guide component.

5. The camera as claimed in claim 3, wherein the first light distribution member contains a light guide component provided in front of the first infrared LED and a light distribution lens provided in front of the light guide component, and
wherein the second light distribution member contains a light guide component provided in front of the second infrared LED and a light distribution lens provided in front of the light guide component.

6. The camera as claimed in claim 5, wherein the light guide component of the first light distribution member and the light guide component of the second light distribution member are integrated by a connecting component, and
wherein the light distribution lens of the first light distribution member and the light distribution lens of the second light distribution member are integrated.

7. The camera as claimed in claim 5 or 6, wherein the light distribution lens of the first light distribution member is configured to distribute the infrared light to only a portion in the front seat area where a face and a shoulder of an occupant seated in a front seat in the vehicle are expected to be located.

8. The camera as claimed in claim 1 or 2, wherein the infrared light irradiation unit is constituted of one infrared LED,
wherein the first light distribution member is a reflector provided so as to surround the infrared LED, and
wherein the second light distribution member contains a light guide component provided in front of the infrared LED and a light distribution lens provided in front of the light guide component.

9. The camera as claimed in any one of claims 1 to 8, wherein the camera is provided in the vicinity of an overhead console located at a center of a ceiling of the vehicle.

10. An occupant detection system used for detecting an occupant in a vehicle, comprising:
the camera defined by any one of the claims 1 to 9, and
a processing unit for detecting the occupant in the vehicle based on an image obtained by the camera.
